Europäisches Patentamt

European Patent Office

Office européen des brevets

(11) Veröffentlichungsnummer: **0 313 764**

**A2**

(12) **EUROPÄISCHE PATENTANMELDUNG**

(21) Anmeldenummer: 88114301.0

(22) Anmeldetag: 01.09.88

(51) Int. Cl.4: **H02K 21/12 , H02K 29/06**

(30) Priorität: 02.09.87 DE 3729298

(43) Veröffentlichungstag der Anmeldung:
03.05.89 Patentblatt 89/18

(84) Benannte Vertragsstaaten:
**AT BE CH DE ES FR GB GR IT LI LU NL SE**

(71) Anmelder: **PRAN MAGNETTECHNIK (EUROPE) GMBH & CO. KG**
**Gehrden 15**
**D-2155 Jork(DE)**

(72) Erfinder: **Wesch Egon Dipl.-Ing.**
**Gehrden 15**
**DE-2155 Jork(DE)**
Erfinder: **Muller Bill**
**863 Government street**
**Penticton, B.C. V24 4 TC(CA)**

(74) Vertreter: **Heldt, Gert, Dr. Dipl.-Ing. et al**
**Neuer Wall 59 III**
**D-2000 Hamburg 36(DE)**

(54) **Vorrichtung zur Energieumwandlung.**

(57) Die Vorrichtung zur Energieumwandlung weist einen Stator und einen beweglich gelagerten Rotor auf. Im Bereich des Rotors sind Rotorpole angeordnet, zwischen denen und im Bereich des Stators angeordneten Statorpolen sich mindestens ein Luftspalt erstreckt. Die Anzahl der Rotorpole ist unterschiedlich zur Anzahl der Statorpole. Die Anzahl der Statorpole kann entweder größer oder kleiner als die Anzahl der Rotorpole sein. Die Anzahl der Statorpole kann gerade und die Anzahl der Rotorpole ungerade sein. Es ist aber auch möglich, eine gerade Anzahl von Rotorpolen und eine ungerade Anzahl von Statorpolen vorzusehen. Insbesondere ist es möglich, sich um einen Pol unterscheidende Anzahlen von Rotor- und Statorpolen vorzusehen.

EP 0 313 764 A2

## Vorrichtung zur Energieumwandlung

Die Erfindung betrifft eine Vorrichtung zur Energieumwandlung, die einen Stator und einen beweglich gelagerten Rotor aufweist, in dessen Bereich Rotorpole angeordnet sind, zwischen denen und im Bereich des Stators angeordneten Statorpolen sich mindestens ein Luftspalt erstreckt.

Derartige Vorrichtungen werden im wesentlichen zur Umwandlung von Bewegungsenergie in elektrische Energie oder von elektrischer Energie in Bewegungsenergie verwendet. Wesentlicher Bestandteil derartiger Vorrichtungen sind die im Bereich des Rotors und des Stators angeordneten Pole, die über Magnetfelder miteinander verkoppelt sind. Die Funktion dieser Vorrichtungen beruht auf der physikalischen Gesetzmäßigkeit, daß sich ändernde magnetische Felder im Bereich von elektrischen Spulen Spannungen induzieren.

Die Vorrichtungen weisen jedoch unerwünschte Laufeigenschaften auf, die daraus resultieren, daß aufgrund der Anordnung der Rotor- und Statorpole bei einer Drehung des Rotors gegenüber dem Stator abwechselnd abstoßende und anziehende magnetische Kräfte Momente um die Rotorlängsachse entfalten Diese wechselnden Momente führen zu unerwünschten Belastungen der Vorrichtung.

Aufgabe der vorliegenden Erfindung ist es daher, eine Vorrichtung der einleitend genannten Art so zu verbessern, daß bei beliebiger Ruhepositionierung des Rotors den Rotor abstoßende und anziehende magnetische Kräfte, die Momente um die Rotordrehachse entfalten im Gleichgewicht stehen. Diese Aufgabe wird erfindungsgemäß dadurch gelöst, daß die Anzahl der Rotorpole unterschiedlich zur Anzahl der Statorpole ist.

Die unterschiedliche Anzahl der Rotor- und Statorpole ermöglicht eine Polanordnung, die den Rotor bei beliebiger Ruhepositionierung mit einander bezüglich der um die Rotorlängsachse entfalteten Momente kompensierenden magnetischen Kräften beaufschlagt. Bei einer Beschleunigung des Rotors brauchen somit lediglich Lagerreibungskräfte und aufgrund der Massenträgheit entfaltete Kräfte überwunden werden. Die Bewegung hemmende magnetische Kräfte treten jedoch nicht auf. Auch bei einem stationären Betrieb des Rotors weist die unterschiedliche Anzahl der Rotor- und Statorpole den Vorteil auf, daß ein äußerst gleichmäßiger Lauf erzielt wird, da keine in Abhängigkeit von der Drehgeschwindigkeit pulsierende Kräfte auf den Rotor einwirken.

Gemäß einer bevorzugten Ausführungsform der Erfindung sind die Rotorpole als Permanentmagneten und die Statorpole als elektrische Spulen ausgebildet. Diese Anordnung ermöglicht es, die Vorrichtung sowohl als Motor als auch als Generator zu betreiben. Die Statorspulen können sowohl als Motorspulen als auch als Generatorspulen ausgebildet sein. Es ist darüber hinaus möglich, sowohl als Motor- als auch als Generatorspulen ausgebildete Statorspulen vorzusehen und im Bereich der Generatorspulen erzeugte Ströme in die Motorspulen einzuleiten. Durch diese mindestens teilweise Rückführung der generatorseitig erzeugten Ströme wird eine äußerst gleichmäßige Betriebsauslastung der Vorrichtung erreicht.

Gemäß einer anderen bevorzugten Ausführungsform der Erfindung sind die Statorpole als von einem Heizmedium umströmte Weicheisenpole ausgebildet. Eine derartige Ausbildung ermöglicht eine unmittelbare Umwandlung von in den Rotor eingeleiteter Bewegungsenergie in Wärmeenergie Auch bei einer Ausbildung der Statorpole als Weicheisenpole ist es möglich, mindestens einige der Statorpole als elektrische Spulen auszubilden.

Gemäß einer weiteren bevorzugten Ausführungsform der Erfindung sind mindestens einige der Statorpole als in jeweils einem Zylinder geführte Kolben ausgebildet, die federnd gelagert sind und ventilgesteuerte Verbindungsleitungen aufweisen. Der Kolben ist aus einem magnetisierbaren Material oder als Permanentmagnet ausgebildet. Durch die Vorbeiführung der im Bereich des Rotors angeordneten Permanentmagneten wird der Kolben entlang der Kolbenlängsachse abwechselnd in eine dem Rotor zugewandte und eine dem Rotor abgewandte Richtung bewegt und fördert dabei in Zusammenwirkung mit der Ventilsteuerung ein Fördermedium.

Gemäß einer anderen bevorzugten Ausführungsform der Erfindung ist der Rotor als Scheibe ausgebildet, die im Bereich ihres Scheibenrandes als Permanentmagneten ausgebildete Rotorpole aufweist, die sich im wesentlichen in Richtung der Rotationsachse erstrecken. Insbesondere ist es auch möglich, die Scheibe als Doppelscheibe auszubilden, und die Permanentmagnete im Bereich von Sacklöchern anzuordnen, die sich ausgehend von den einander zugewandten Begrenzungen der Teilscheiben in eine diesen Begrenzungen abgewandte Richtung erstrecken. Durch diese Ausbildung der Scheibe ist es möglich, die Vorteile eines Scheibenläufers, beispielsweise das geringe Trägheitsmoment und die Wartungsfreundlichkeit, mit einer gegen mechanische Belastungen geschützten Anordnung der Permanentmagnete zu verbinden.

Weitere Einzelheiten der vorliegenden Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

Fig. 1: eine Prinzipskizze einer Anordnung von Rotor-und Statorpolen, die sich bezüglich ihrer Anzahl um einen Pol unterscheiden,

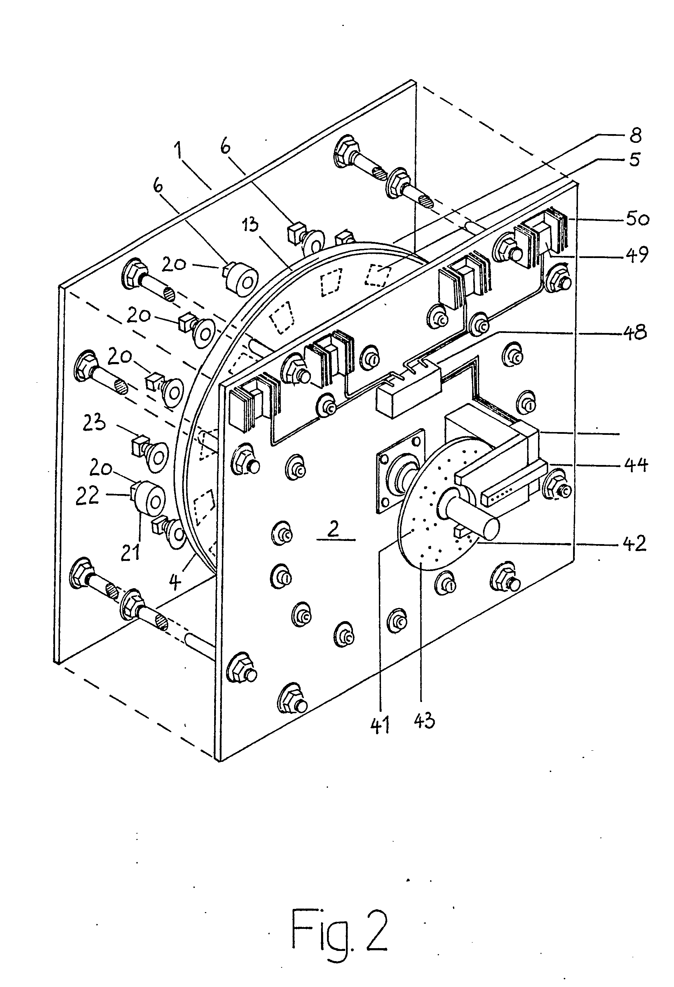

Fig. 2: eine perspektivische Darstellung einer als Scheibenläufer ausgebildeten Vorrichtung mit im Bereich der Rotationsachse angeordnetem Positionssensor,

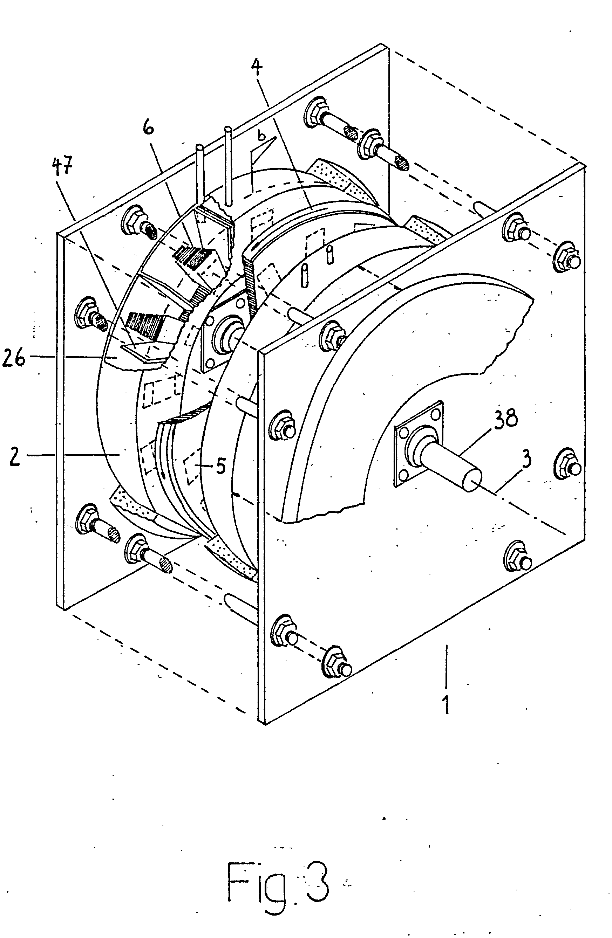

Fig. 3: eine perspektivische Darstellung einer zur Umwandlung von mechanischen Energie in Wärmeenergie vorgesehenen Vorrichtung,

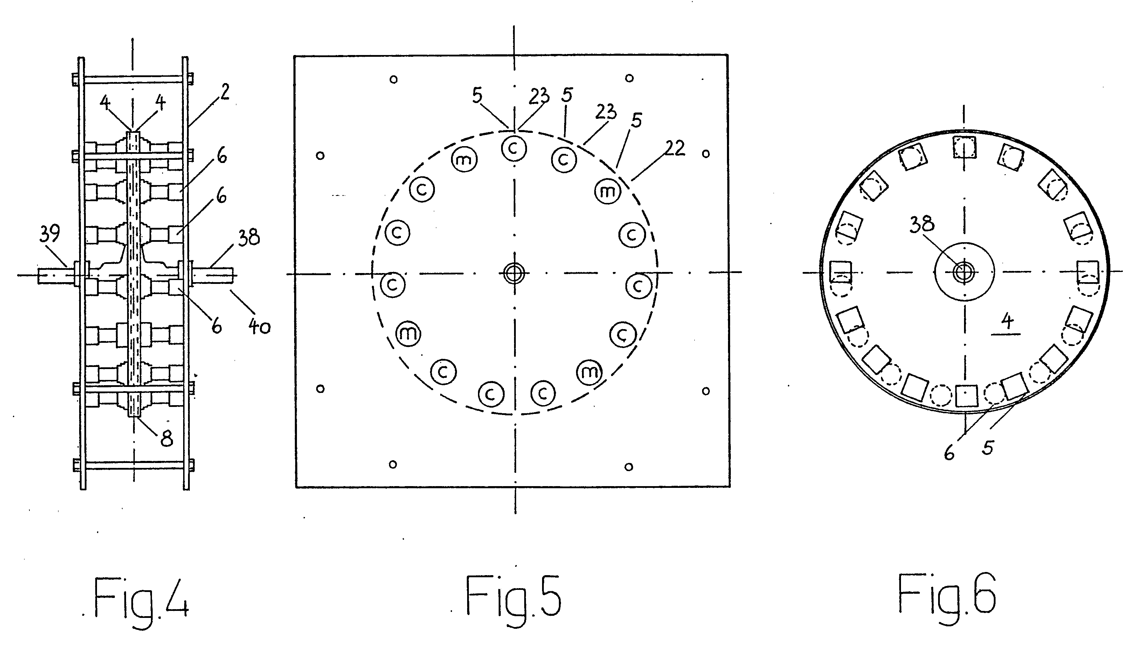

Fig. 4: eine Seitenansicht einer Vorrichtung, die einen als Scheibenläufer ausgebildeten Rotor aufweist, der im Bereich eines Stators angeordnet ist, der sowohl als Motor- als auch als Generatorspulen ausgebildete Statorspulen aufweist,

Fig. 5: eine Draufsicht auf eine Vorrichtung gemäß Figur 4,

Fig. 6: eine prinzipielle Darstellung der Anordnung der Rotor- und Statorpole der Vorrichtung gemäß Figur 5,

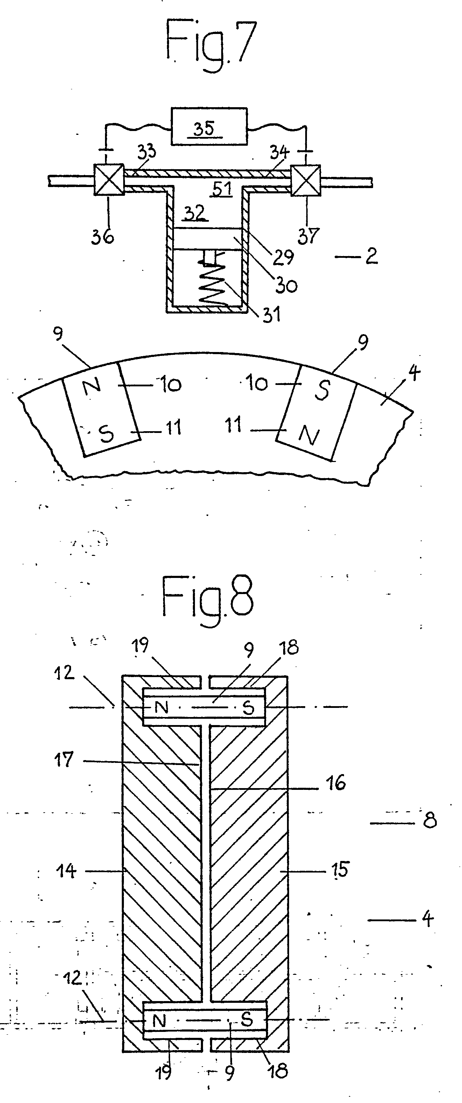

Fig. 7: eine teilweise Darstellung einer Vorrichtung, die als Permanentmagnete ausgebildete Rotorpole und als federnd gelagerte Kolben ausgebildete Statorpole aufweist,

Fig. 8: einen Längsschnitt durch einen Rotor, der aus zwei Teilscheiben ausgebildet ist, die Sacklöcher aufweisen, in denen Permanentmagnete angeordnet sind,

Fig. 9: einen Querschnitt durch einen zur Umwandlung von mechanischer Energie in Wärmeenergie vorgesehenen Energiekonverter,

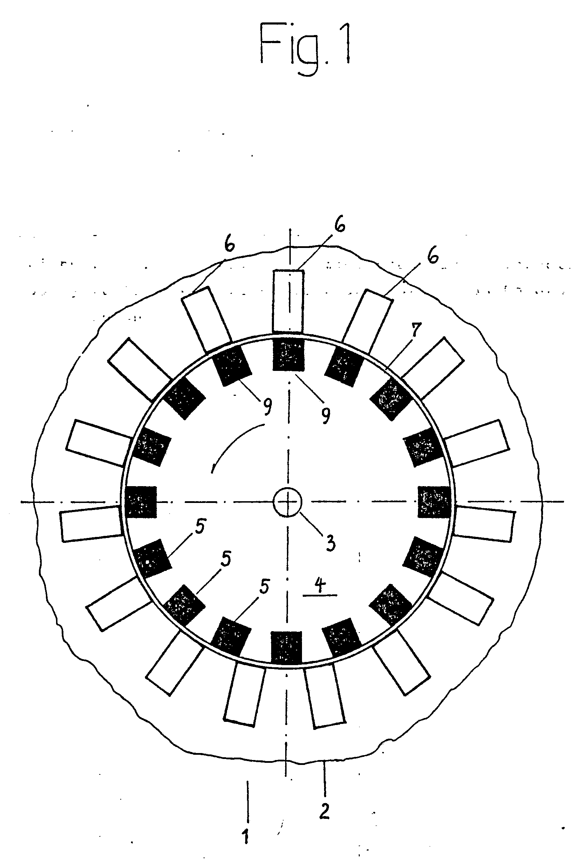

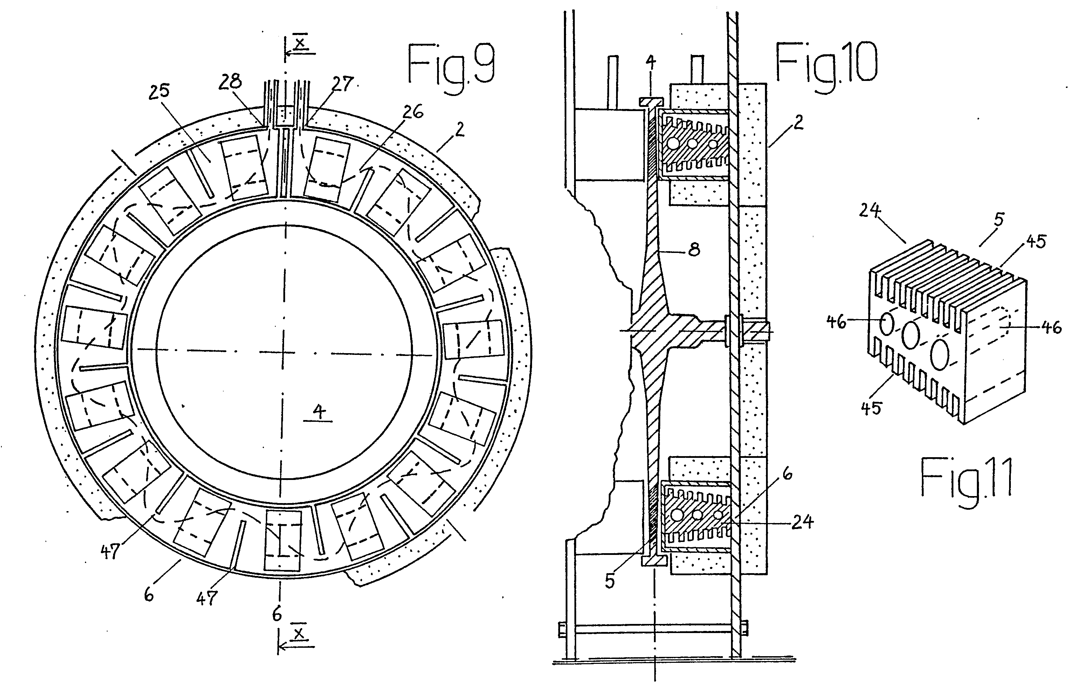

Fig. 1o: einen Längsschnitt gemäß Schnittlinie X-X in Figur 9,

Fig. 11: eine vergrößerte Darstellung eines Statorpoles mit Kühlrippen und Durchlaßbohrungen und

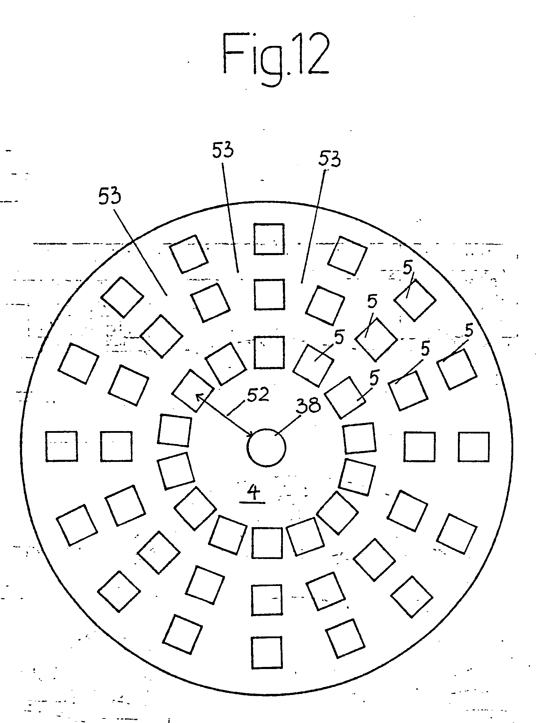

Fig. 12: eine Draufsicht auf eine Rotorscheibe mit Rotorpolen, die gruppenweise Rotorpolringe ausbilden.

Ein Energiekonverter (1) besteht im wesentlichen aus einem Stator (2) und einem bezüglich einer Rotationsachse (3) drehbeweglich gelagerten Rotor (4). Im Bereich des Rotors (4) sind Rotorpole (5) und im Bereich des Stators (2) Statorpole (6) angeordnet. Zwischen dem Rotor (4) und dem Stator (2) erstreckt sich ein Luftspalt (7) Der Rotor (4) ist im wesentlichen zylindrisch ausgebildet und mindestens im Bereich der Zylinderwandungen vom Stator (2) umschlossen. Es ist aber auch möglich, den Rotor (4) als Rotorscheibe (8) auszubilden.

Die Anzahl der Rotorpole (5) ist zur Anzahl der Statorpole (2) unterschiedlich. Die Anzahl der Rotorpole (5) ist dabei um einen Pol größer als die Anzahl der Statorpole (2) Es ist aber auch möglich, mehr Statorpole (6) als Rotorpole (5) vorzusehen oder einen Unterschied der Polanzahl um mehr als einen Pol vorzusehen.

Der Rotorpol (5) ist als Permanentmagnet (9) ausgebildet, der einen Nordpol (1o) und einen Südpol (11) aufweist Bei einem im wesentlichen zylinderförmig ausgebildeten Rotor (4) sind die Permanentmagnete (9) mit ihren Magnetisierungslängsachsen (12) in Richtung auf.die Rotationsachse (3) ausgerichtet. Bei einem als Rotorscheibe (8) ausgebildeten Rotor (4) sind die Permanentmagnete (9) im Bereich eines Randes (13) der Rotorscheibe (8) angeordnet und weisen Magnetisierungslängsachsen (12) auf, die sich im wesentlichen in Richtung der Rotationsachse (3) erstrecken. Die Rotorscheibe (8) ist im wesentlichen als einheitliches Teil ausgebildet, es ist aber auch möglich, die Rotorscheibe (8) aus Teilscheiben (14,15) auszubilden, die im Bereich ihrer einander zugewandten Begrenzungen (16,17) Sacklöcher (18, 19) aufweisen, die sich ausgehend von den Begrenzungen (16, 17) in eine den Begrenzungen (16,17) abgewandte Richtung erstrecken. In den Sacklöchern (18,19) sind Permanentmagnete (9) angeordnet.

Die Statorpole (6) sind als Spulen (2o) ausgebildet, die aus einem elektrischen Leiter (21) gewikkelt sind. Die Spulen (2o) sind als Motorspulen (22) ausgebildet, es ist aber auch möglich, die Spulen (2o) als Generatorspulen (23) auszubilden oder sowohl Motorspulen (22) als auch Generatorspulen (23) vorzusehen. Darüber hinaus ist es möglich, mindestens eine der Generatorspulen (23) elektrisch mit mindestens einer Motorspule (22) zu verbinden und im Bereich der Generatorspule (23) erzeugte elektrisch Energie auf die Motorspule (22) zurückzuführen. Es ist aber auch möglich, den Statorpol (6) als Weicheisenpol (24) auszubilden, der in einem von einem Heizmedium (25) durchströmten Statorinnenraum (26) angeordnet ist. Der Statorinnenraum (26) weist mindestens eine das Heizmedium (25) leitende Einlaßöffnung (27) und mindestens eine Auslaßöffnung (28) auf.

Des weiteren ist es möglich, den Statorpol (6) als in einem Zylinder (29) geführten Kolben (3o) auszubilden. Der Kolben (3o) ist mit einer Feder (31) federnd gelagert und aus einem magnetisierbaren Material ausgebildet. Es ist aber auch möglich, den Kolben (3o) als Permanentmagneten (9) auszubilden. Der Zylinder (29) umschließt einen Zylinderinnenraum (32), in den eine Einlaßleitung (33) und eine Auslaßleitung (34) einmündet. Im Bereich der Leitungen (33, 34) sind mit einer Ventilsteuerung (35) verbundene Ventile (36,37) angeordnet.

Entlang der Rotationsachse (3) erstreckt sich eine Welle (38), die im Bereich ihrer Enden (39,4o) im Bereich des Stators (2) drehbeweglich gelagert ist. Mindestens eines der Enden (39,4o) ist aus dem Stator (2) herausgeführt. Im Bereich eines der Enden (39,4o) ist ein Positionssensor (41) angeordnet, der als Lochscheibe (42) ausgebildet ist, in der Löcher (43) angeordnet sind, die eine die jeweilige Rotorposition charakterisierende Gruppierung aufweisen. Es ist aber auch möglich, den Positionssensor (41) als Strichcodescheibe mit die jeweilig Rotorposition codierenden Strichen auszubilden. Der Positionssensor (41) wird an einem die Positionsinformationen aufnehmenden und weiterleitenden Meßaufnehmer (44) vorbeigeführt.

Der Weicheisenpol (24) eines Energiekonverters (1) zur Umwandlung von mechanischer Energie in Wärmeenergie weist seine Oberfläche vergrößernde Kühlrippen (45) sowie Durchlaßbohrungen (46) auf. Der Weicheisenpol (24) ist im wesentlichen zylindrisch ausgebildet, es ist aber auch möglich, ihm eine quaderförmige Ausbildung zu verleihen. Es ist darüber hinaus möglich, daß der Weicheisenpol (24) sich verjüngend in eine dem Rotor (4) abgewandte Richtung erstreckt. Im Statorinnenraum (26) sind das Heizmedium (25) leitende Innenwandungen (47) angeordnet, die sich im wesentlichen zentrisch zur Rotatonsachse (3) erstrekken.

Der Meßaufnehmer (44) ist mit einer die Motorspulen (22) ansteuernden Motorsteuerung (48) verbunden. Die Motorsteuerung (48) weist elektronische Schaltelemente (49) auf, die auf Kühlkörpern (5o) angeordnet sind.

Bei einem als Rotorscheibe (8) ausgebildeten Rotor (4) sind die Rotorpole (5) mit im wesentlichen gleichen Rotorradius (52) einen symmetrisch zur Welle (38) angeordneten Rotorpolring (53) ausbildend angeordnet. Es ist aber auch möglich, die Rotorpole (5) auf unterschiedlichen Rotorradien (52) anzuordnen. Jeweils Gruppen von Rotorpolen (5) bilden dabei Rotorpolringe (53) aus, die jeweils zentrisch zur Welle (38) angeordnet sind. Jedem Rotorpolring (53) liegt ein im Bereich des Stators (2) angeordneter und von Statorpolen (6) ausgebildeter Statorpolring gegenüber. Die Rotorpolringe (53) weisen eine gleiche Anzahl von Rotorpolen (5) auf. Es ist aber auch möglich, mindestens zwei Rotorpolringe (53) vorzusehen, die eine unterschiedliche Anzahl von Rotorpolen (5) aufweisen oder sowohl Rotorpolringe (53) mit einer gleichen Anzahl als auch Rotorpolringe (53) mit einer unterschiedlichen Anzahl von Rotorpolen (5) im Bereich der Rotorscheibe (8) anzuordnen.

Ein zur Umwandlung von mechanische Energie in Wärmeenergie vorgesehener Energiekonverter (1) weist einen Rotor (4) auf, der über die Welle (38) mit einem Antrieb verbunden ist. Der Antrieb versetzt den Rotor (4) in eine Rotationsbewegung und führt die im Bereich des Rotors (4) angeordneten Rotorpole (5) an den im Bereich des Stators (2) angeordneten Weicheisenpolen (24) vorbei Die im Bereich des Rotors (4) angeordneten Permanentmagnete (9) weisen entlang des Randes (13) wechselnde Orientierungen ihrer Magnetisierungslängsachsen (12) auf. Durch die Vorbeiführung der Rotorpole (5) an den Weicheisenpolen (24) werden diese fortlaufend ummagnetisiert und durch die mit der Ummagnetisierung verbundenen physikalischen Vorgänge erwärmt.

An den Weicheisenpolen (24) wird das Heizmedium (25) vorbei geführt. Es umströmt die Weicheisenpole (24) dabei im Bereich deren Kühlrippen (45) und durchströmt die Weicheisenpole (24) im Bereich deren Durchlaßbohrungen (46). Das Heizmedium (25) wird durch die Einlaßöffnung (27) in den Statorinnenraum (26) eingeleitet und durch die Innenwandungen (27) in wechselnden Strömungsrichtungen durch den Statorinnenraum (26) hindurchgeleitet. Das erwärmte Heizmedium (25) verläßt den Statorinnenraum im Bereich der Auslaßöffnung (28). Bei einem sich in einer dem Rotor (4) abgewandte Richtung verjüngenden Weicheisenpol (24) weist dieser im Bereich seiner dem Rotor (4) zugewandten Ummagnetisierung eine größere Oberfläche auf als im Bereich seiner dem Rotor (4) abgewandt angeordneten schwächeren Ummagnetisierung. Im Bereich des Weicheisenpoles (24) entstehende Wärmeenergie wird dadurch gleichmäßig abgeführt und auf das Heizmedium (25) übertragen.

Bei einem Energiekonverter (1), der zur Umwandlung von mechanischer Energie in elektrische Energie beziehungsweise von elektrischer Energie in mechanischer Energie vorgesehen ist, sind die Statorpole (6) als Spulen (2o) ausgebildet. Die Rotorpole (5) werden an den Spulen (2o) vorbeigeführt und erzeugen im Bereich der Spulen (2o) magnetische Felder wechselnder Intensität. Durch die Änderung des magnetischen Feldes im Bereich der Spulen (2o) wird in diesen eine elektrische Spannung induziert, die zur Speisung elektrischer Verbraucher verwendet werden kann. Bei einer Ausbildung der Statorpole (6) als Motorspulen (22) kann der Rotor (4) angetrieben werden und über die Welle (38) mechanische Arbeitsgeräte in Bewegung versetzen. Werden sowohl Motorspulen (22) als auch Generatorspulen (23) vorgesehen, so kann mindestens ein Teil der im Bereich der Generatorspulen (23) erzeugten elektrischen Energie in die Motorspulen (22) zurückgeführt werden. Hierdurch erfolgt eine gleichmäßige Auslastung des Energiekonverters (1). Mit Hilfe der vom Positionssensor (41) gelieferten Informationen ist es möglich, die Motorspulen (22) in Abhängigkeit von der jeweiligen Positionierung des Rotors (4) anzusteuern und den Rotor (4) mit ihn antreibenden Kräften zu beaufschlagen. Insbesondere ist hierbei an eine impulsförmige Ansteuerung der Motorspulen (22) gedacht.

Bei einem Energiekonverter (1) zur Umsetzung einer rotatorischen Bewegung in eine Längsbewegung des Kolbens (3o) wird der Kolben (3o) durch die alternierend im Bereich des Rotors (4) angeordneten Permanentmagnete (9) abwechselnd in Richtung des Rotors (4) gezogen und anschließend in eine dem Rotor (4) abgewandte Richtung gedrückt. Bei der Ausbildung des Kolbens (3o) als Permanentmagnet (9) und alternierender Anordnung der Permanentmagnete (9) im Bereich des Rotors (4) kann auch auf die Feder (31) verzichtet werden und die Bewegung des Kolbens (3o) lediglich aufgrund der einander abwechselnd anziehenden und abstoßenden Magnete erfolgen. Durch die Ventilsteuerung (35) werden die Ventile (36,37) in Abhängigkeit von der jeweiligen Positionierung des Kolbens (3o) gesteuert und ermöglichen den Zufluß eines Pumpmediums (51) in den Zylinderinnenraum (32) bei einer Saugbewegung des Kolbens (3o) in Richtung auf den Rotor (5o) und einen anschließenden Austritt des Pumpmediums (51) aus dem Zylinderinnenraum (32) bei einer Bewegung des Kolbens (3o) in eine dem Rotor (4) abgewandte Richtung.

**Ansprüche**

1. Vorrichtung zur Energieumwandlung, die einen Stator und einen beweglich gelagerten Rotor aufweist, in dessen Bereich Rotorpole angeordnet sind, zwischen denen und im Bereich des Stators angeordneten Statorpolen sich mindestens ein Luftspalt erstreckt, dadurch gekennzeichnet, daß die Anzahl der Rotorpole (5) unterschiedlich zur Anzahl der Statorpole (6) ist.

2. Vorrichtung nach Anspruch 1, dadurch gekennzeichnet, daß die Anzahl der Statorpole (6) größer als die Anzahl der Rotorpole (5) ist.

3. Vorrichtung nach Anspruch 1, dadurch gekennzeichnet, daß die Anzahl der Rotorpole (5) größer als die Anzahl der Statorpole (6) ist.

4. Vorrichtung nach Anspruch 1 bis 3, dadurch gekennzeichnet, daß die Anzahl der Statorpole (6) gerade und die Anzahl der Rotorpole (5) ungerade ist.

5. Vorrichtung nach Anspruch 1 bis 3, dadurch gekennzeichnet, daß die Anzahl der Rotorpole (5) gerade und die Anzahl der Statorpole (6) ungerade ist.

6. Vorrichtung nach Anspruch 1 bis 5, dadurch gekennzeichnet, daß die Anzahl der Rotorpole (5) um einen Pol zur Anzahl der Statorpole (6) unterschiedlich ist.

7. Vorrichtung nach Anspruch 1 bis 6, dadurch gekennzeichnet, daß mindestens einer der Rotorpole (5) als Permanentmagnet (9) ausgebildet ist.

8. Vorrichtung nach Anspruch 1 bis 7, dadurch gekennzeichnet, daß mindestens einer der Statorpole (6) aus einem magnetisierbaren Material ausgebildet ist.

9. Vorrichtung nach Anspruch 8, dadurch gekennzeichnet, daß mindestens einer der Statorpole (6) als Weicheisenpol (24) ausgebildet ist.

1o. Vorrichtung nach Anspruch 1 bis 9, dadurch gekennzeichnet, daß mindestens einer der Statorpole (6) als Spule (2o) ausgebildet ist, die aus mindestens einem elektrischen Leiter (21) gewickelt ist.

11. Vorrichtung nach Anspruch 1 bis 1o, dadurch gekennzeichnet, daß mindestens einer der Statorpole (6) als beweglich in einem Zylinder (29) gelagerter Kolben (3o) ausgebildet ist.

12. Vorrichtung nach Anspruch 11, dadurch gekennzeichnet, daß der Kolben (3o) federnd gelagert ist.

13. Vorrichtung nach Anspruch 11 und 12, dadurch gekennzeichnet, daß der Kolben (3o) aus einem magnetisierbaren Material ausgebildet ist.

14. Vorrichtung nach Anspruch 11 bis 13, dadurch gekennzeichnet, daß der Kolben (3o) als Permanentmagnet (9) ausgebildet ist.

15. Vorrichtung nach Anspruch 11 bis 14, dadurch gekennzeichnet, daß der Zylinder (29) mit mindestens einer Einlaßleitung (33) und mindestens einer Auslaßleitung (24) verbunden ist, in deren Bereich mindestens jeweils ein mit einer Ventilsteuerung (35) verbundenes Ventil (36,37) angeordnet ist.

16. Vorrichtung nach Anspruch 1 bis 15, dadurch gekennzeichnet, daß der Rotor (4) im wesentlichen zylindrisch ausgebildet ist.

17. Vorrichtung nach Anspruch 1 bis 15, dadurch gekennzeichnet, daß der Rotor (4) im wesentlichen als Rotorscheibe (8) ausgebildet ist.

18. Vorrichtung nach Anspruch 17, dadurch gekennzeichnet, daß die Rotorscheibe (8) im wesentlichen kreisförmig ausgebildet ist.

19. Vorrichtung nach Anspruch 16, dadurch gekennzeichnet, daß die Rotorpole (5) mit ihren Magnetisierungslängsachsen (12) im wesentlichen auf eine Rotationsachse (6) ausgerichtet sind.

2o. Vorrichtung nach Anspruch 17, dadurch gekennzeichnet, daß die Rotorpole (5) mit ihren Magnetisierungslängsachsen (12) im wesentlichen in Richtung der Rotationsachse (3) ausgerichtet und im Bereich eines die Rotorscheibe (8) begrenzenden Randes (13) angeordnet sind.

21. Vorrichtung nach Anspruch 17, dadurch gekennzeichnet, daß die Rotorscheibe (8) aus zwei Teilscheiben (14,15) ausgebildet ist, die im Bereich ihrer einander zugewandten Begrenzungen (16,17) Sacklöcher (18,19) aufweisen, in denen die Rotorpole (5) angeordnet sind.

22. Vorrichtung nach Anspruch 1 bis 21, dadurch gekennzeichnet, daß mindestens ein Statorpol (6) in Richtung der Magnetisierungslängsachse (12) des ihm zugewandt angeordneten Rotorpoles (5) justierbar ausgebildet ist.

23. Vorrichtung nach Anspruch 1 bis 22, dadurch gekennzeichnet, daß die Spule (2o) als mit einem elektrischen Verbraucher verbundene Generatorspule (23) ausgebildet ist.

24. Vorrichtung nach Anspruch 1 bis 22, dadurch gekennzeichnet, daß die Spule (2o) als mit einer elektrischen Energieversorgung verbundene Motorspule (22) ausgebildet ist.

25. Vorrichtung nach Anspruch 1 bis 24, dadurch gekennzeichnet, daß mindestens eine Generatorspule (23) mit mindestens einer von ihr elektrisch gespeisten Motorspulen (22) verbunden ist.

26. Vorrichtung nach Anspruch 1 bis 25, dadurch gekennzeichnet, daß im Bereich mindestens eines Endes (39,4o) einer sich im Bereich der Rotationsachse (3) erstreckenden Welle (38) ein die Rotationsorientierung des Rotors (4) anzeigender Positionssensor (41) angeordnet ist.

27. Vorrichtung nach Anspruch 26, dadurch gekennzeichnet, daß der Positionssensor (41) als Lochscheibe (42) ausgebildet ist.

28. Vorrichtung nach Anspruch 27, dadurch gekennzeichnet, daß im Bereich der Lochscheibe (42) die jeweilige Rotationsorientierung des Rotors (4) codierende Löcher (43) angeordnet sind.

29. Vorrichtung nach Anspruch 26, dadurch gekennzeichnet, daß der Positionssensor (41) als Strichcodescheibe ausgebildet ist, in deren Bereich die jeweilige Rotationsorientierung des Rotors (4) codierende Striche angeordnet sind.

3o. Vorrichtung nach Anspruch 1 bis 29, dadurch gekennzeichnet, daß im Bereich des Positionssensors (4) ein die Positionsinformation verarbeitender Meßaufnehmer (44) angeordnet ist.

31. Vorrichtung nach Anspruch 3o, dadurch gekennzeichnet, daß der Meßaufnehmer (44) mit der die Ventile (36,37) steuernden Ventilsteuerung (35) verbunden ist.

32. Vorrichtung nach Anspruch 3o, dadurch gekennzeichnet, daß der Meßaufnehmer (44) mit einer die Motorspulen (22) ansteuernden Motorsteuerung (48) verbunden ist.

33. Vorrichtung nach Anspruch 9, dadurch gekennzeichnet, daß mindestens ein Weicheisenpol (24) in einem Statorinnenraum (26) angeordnet ist.

34. Vorrichtung nach Anspruch 1 bis 33, dadurch gekennzeichnet, daß der Statorinnenraum (26) eine ein Heizmedium (25) zuleitende Einlaßöffnung (27) und eine das Heizmedium (25) ableitende Auslaßöffnung (28) aufweist.

35. Vorrichtung nach Anspruch 1 bis 34, dadurch gekennzeichnet, daß im Statorinnenraum (26) mindestens eine das Heizmedium (25) umleitende Innenwandung (47) angeordnet ist.

36. Vorrichtung nach Anspruch 1 bis 35, dadurch gekennzeichnet, daß der Weicheisenpol (24) seine Oberfläche vergrößernde Kühlrippen (45) aufweist.

37. Vorrichtung nach Anspruch 1 bis 36, dadurch gekennzeichnet, daß der Weicheisenpol (24) mindestens eine sich in Strömüngsrichtung des Heizmediums (25) erstreckende Durchlaßbohrung (46) aufweist.

38. Vorrichtung nach Anspruch 1 bis 37, dadurch gekennzeichnet, daß der Weicheisenpol (24) eine sich in eine dem Rotor (4) abgewandte Richtung verjüngende Ausbildung aufweist.

39. Vorrichtung nach Anspruch 1 bis 38, dadurch gekennzeichnet, daß ein als Rotorscheibe (8) ausgebildeter Rotor (4) Rotorpole (5) aufweist, die auf unterschiedlichen Rotorradien (52) angeordnet sind.

4o. Vorrichtung nach Anspruch 39, dadurch gekennzeichnet, daß mindestens einige der Rotorpole (5) einen Rotorpolring (53) ausbildend angeordnet sind, der zentrisch zur Welle (8) angeordnet ist.

41. Vorrichtung nach Anspruch 39 und 4o, dadurch gekenn zeichnet, daß dem Rotorpolring (53) ein im Bereich des Stators (2) aus Statorpolen (6) ausgebildeter Statorpolring (53) im wesentlichen gegenüberliegend angeordnet ist.

42. Vorrichtung nach Anspruch 39 bis 41, dadurch gekennzeichnet, daß im Bereich von mindesten zwei Rotorpolringen (53) jeweils eine gleiche Anzahl von Rotorpolen(5) angeordnet ist.

43. Vorrichtung nach Anspruch 39 bis 41, dadurch gekennzeichnet, daß im Bereich von mindesten zwei Rotorpolringen (53) jeweils eine unterschiedliche Anzahl von Rotorpolen (5) angeordnet ist.

# Fig.1

Fig. 2

Fig 3

EP 0 313 764 A2

Fig.4

Fig.5

Fig.6

# Fig.7

# Fig.8

Fig.10

Fig.11

Fig.9

Fig.12

POOR QUALITY